# FASCICULE DE BREVET EUROPEEN

(11) **EP 0 481 876 B1**
(45) Date de publication et mention de la délivrance du brevet: **19.04.1995**
(21) Numéro de dépôt: 91402749.5
(22) Date de dépôt: 15.10.1991
(51) Int. Cl.: G02B 6/42

(54) **Procédé d'alignement des axes optiques d'une fibre et d'un composant optoélectronique, et dispositif obtenu par ce procédé**
Justierverfahren der optischen Achsen von einer Faser und von einem optoelektronischen Bauelement und die mit diesem Verfahren hergestellte Vorrichtung
Alignment method of the optical axes of a fibre and an optoelectronic element and device fabricated utilising this method

(30) Priorité: 19.10.1990 FR 9012957
(43) Date de publication de la demande: 22.04.1992
(73) Titulaire: THOMSON-CSF SEMICONDUCTEURS SPECIFIQUES, 92800 Puteaux (FR)
(72) Inventeur: Avelange, Gérôme, F-92045 Paris la Défense (FR); Tournereau, Alain, F-92045 Paris la Défense (FR)
(74) Mandataire: Taboureau, James

(56) Documents cités:
- DE-A- 3 431 775
- DE-A- 3 630 795
- PATENT ABSTRACTS OF JAPAN, vol. 14, no. 84 (P-1007)(4027) 16 Février 1990 & JP A 1296204
- PATENT ABSTRACTS OF JAPAN, vol. 13, no. 543 (P-970)(3891) 6 Décembre 1989 & JP A 1225909

## Description

La présente invention concerne un dispositif et un procédé d'alignement optique entre une fibre optique et un dispositif semiconducteur optoélectronique, de type laser par exemple. Le dispositif et le procédé sont originaux en ce sens qu'ils mettent en oeuvre les coordonnées polaires pour positionner la fibre, plutôt que les coordonnées cartésiennes.

Il est connu qu'en raison des très faibles dimensions des composants optoélectroniques, émetteurs ou récepteurs de lumière, lasers, photodiodes, diodes électroluminescentes, le réglage de l'alignement des axes optiques est délicat, puisqu'il nécessite dans certains cas une précision de l'ordre de ou supérieure au micron. C'est pourquoi ce réglage d'alignement est très généralement effectué en dynamique, et la fibre optique déplacée avec un micromanipulateur, est ajustée en position, le dispositif optoélectronique étant en fonctionnement.

Ce réglage se fait selon trois axes orthogonaux dans l'espace, qu'on appellera, pour la commodité, les axes Ox et Oy dans un plan perpendiculaire à l'axe optique , et l'axe Oz parallèle à l'axe optique : le réglage se fait donc dans un système de coordonnées cartésiennes.

D'un point de vue pratique, il y a essentiellement deux moyens pour aligner une fibre optique et un dispositif optoélectronique. Le premier moyen consiste à déplacer la fibre au sein d'une goutte de colle ou de brasure fondue, placée à proximité de la surface émettrice ou réceptrice de lumière. Lorsque le couplage optimal est atteint, la goutte de colle est polymérisée par un flash ultra-violet, ou la goutte de brasure est figée par refroidissement. Le procédé est simple et économique, mais il présente l'inconvénient que le retreint au durcissement de la goutte déplace ou casse la fibre.

Le second moyen est basé sur le déplacement de la fibre dans deux plans orthogonaux, dont l'un est perpendiculaire à l'axe optique et l'autre parallèle au même axe. Ceci entraîne que les plans sont parfaitement usinés pour que le positionnement de la fibre optique soit précis et fiable. En outre, il n'est pas toujours facile de fixer une pièce plane sur une autre pièce plane, sauf par leurs bords communs.

Il est connu d'utiliser deux cales taillées en coins pour positionner une pièce : le déplacement latéral d'une cale, par glissement sur une embase, déplace la pièce qui s'appuie sur cette cale, dans un plan perpendiculaire au plan de l'embase. Le brevet DE-A-3 630 795 montre comment l'embout d'une fibre optique est ainsi positionné, dans le berceau que forment deux cales montées tête-bêche, pendant la soudure laser du dit embout sur une pièce d'alignement. Mais dans ce document, les pièces en mouvement se déplacent selon des coordonnées cartésiennes, par translation et non pas par modification de l'angle formé par deux pièces.

Le procédé selon l'invention, et le dispositif optoélectronique obtenu par ce procédé, utilisent non plus un système de coordonnées cartésiennes, comme dans l'art connu, mais un système de coordonnées polaires, qui a l'avantage de simplifier les pièces mécaniques en contact. Les contacts surfaciques des systèmes de coordonnées cartésiennes sont remplacés par des contacts linéiques, en coordonnées polaires.

Sommairement, la fibre optique est scellée dans un embout métallique, ce qui permettra ultérieurement de la souder en position. Cet embout est positionné au moyen d'au moins deux plaquettes métalliques, dont une extrêmité - pour chacune d'elles - s'appuie dans une rainure creusée dans un bloc métallique qui sert d'embase au laser, ou au dispositif optoélectronique. L'autre extrémité de chacune des plaquettes s'appuie contre l'embout métallique de la fibre. Lorsque la fibre optique est positionnée, par micromanipulation et en fonctionnement, les positions des pièces métalliques sont figées par tirs lasers qui les soudent ensemble.

De façon plus précise, l'invention concerne un procédé d'alignement des axes optiques d'une fibre optique et d'un composant semiconducteur optoélectronique, fixé sur une embase dont une face supérieure sert de plan de référence, procédé dans lequel la fibre optique, munie d'un embout métallique, est alignée en face du composant au moyen d'au moins deux plaquettes métalliques, situées de part et d'autre de la fibre ce procédé étant caractérisé en ce que les plaquettes s'appuient d'une part dans des rainures creusées dans la face de référence de l'embase du dispositif et d'autre part contre l'embout de la fibre, et en ce que les angles des plaquettes avec cette face déterminent la position de la fibre.

L'invention sera mieux comprise par la description plus détaillée d'un exemple d'application et de deux variantes, illustré par les figures jointes qui représentent :
- fig. 1 et 2 : vues en coupes, selon deux plans orthogonaux, d'un dispositif selon l'invention,
- fig. 3,4, et 5 : vues dans l'espace d'un dispositif selon l'invention, dans trois variantes de réalisation pour aligner la fibre optique sur l'axe du composant optoélectronique.

De façon à simplifier les explications et les figures, l'invention sera exposée en s'appuyant sur l'exemple d'un laser, mais il est évident pour l'homme de l'art que cela ne limite en rien la portée de l'invention. Si le dispositif semiconducteur optoélectronique est une diode électroluminescente, ou un phototransistor par exemple, seule change la forme du support d'embase : la manipulation de fibre serait dans ce cas plus simple, car ce sont les lasers qui exigent la plus grande précision dans l'alignement.

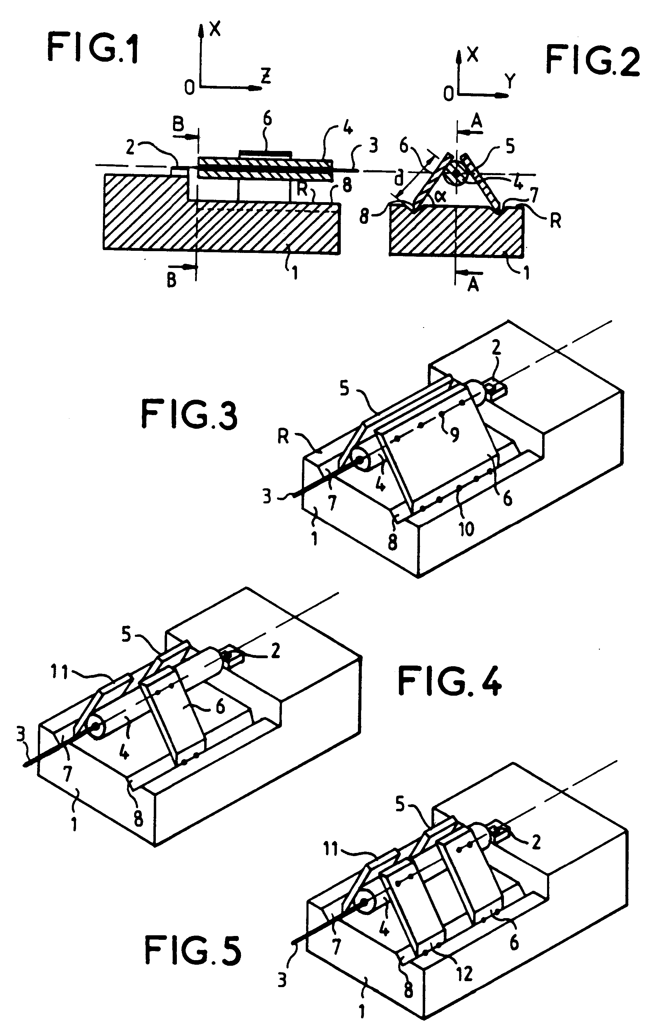

Les figures 1 et 2 sont volontairement alignées au niveau de l'axe optique commun au laser et à la fibre. La figure 1 représente une coupe en élévation au niveau du plan de symétrie A-A du dispositif, et la figure 2 représente une coupe en élévation au niveau B-B de l'extrêmité de la fibre face au laser.

Cette partie d'une tête optique, qui est en fait plus complexe et comporte un boîtier et d'autres composants électroniques, comprend au moins une embase métallique 1, de forme et de dimensions adaptées selon les cas, mais ayant le caractère permanent de servir d'embase et de plan de référence R au laser 2 et à la fibre optique 3. Celle-ci est elle-même passée et fixée dans un embout cylindrique métallique 4, selon une technique bien connue qui permet de saisir la fibre pour la micromanipuler, sans la casser.

Les moyens de fixation de la fibre 3 dans une position alignée sur le ruban émetteur du laser 2 consistent en au moins deux plaquettes métalliques 5 et 6. Chacune a un côté, préférablement taillé en arête, qui repose dans une rainure 7 et 8, respectivement, creusée dans l'embase 1, parallèlement à l'axe optique. Les rainures 7 et 8 sont suffisamment éloignées l'une de l'autre pour que les plaquettes 5 et 6 puissent, sous l'effet des forces de gravité, s'appuyer contre l'embout métallique 4. Puisque les rainures 7 et 8 sont parallèles à l'axe optique, il s'ensuit que les plaquettes 5 et 6 sont en contact avec une génératrice de l'embout cylindrique 4 : il s'agit donc d'un contact linéïque, plus facile à réaliser qu'un contact entre plans comme cela se pratique dans l'art connu.

Telles qu'elles sont décrites jusqu'à présent, les pièces composant le système ne sont que posées : elles ne sont pas fixées. Leur fixation interviendra après le réglage de l'alignement entre l'axe optique du laser 2 et l'axe optique de la fibre 3.

La figure 2 montre que chacune des plaquettes 5 et 6 peut pivoter autour de la rainure 7 et 8, donc avoir son angle propre, dans un système de coordonnées polaires. La combinaison des angles des deux plaquettes 5 et 6 permet de centrer la fibre 3 selon l'axe Oy.

Mais simultanément, le micromanipulateur -qui n'est pas représenté- peut relever ou abaisser l'embout 4 de façon à aligner selon l'axe Ox la fibre 3 sur le laser 2. Ce faisant, si l'embout 4 varie en position, il déplace les plaquettes 5 et 6 : c'est donc finalement dans un système de coordonnées polaires qu'est réglée la position de la fibre optique, définie par l'angle α que fait l'une des plaquettes 5 ou 6 avec le plan supérieur de l'embase 1, et la distance "d" à laquelle l'embout 4 est tangent à ladite plaquette 5 ou 6.

Pour une fabrication de série dans laquelle tous les embouts sont fabriqués avec grande précision et régularité, la position de la fibre peut également être définie par les deux angles des deux plaquettes 5 et 6.

Le réglage de la distance qui sépare le laser 2 et l'extrêmité de la fibre 3, selon l'axe Oz, peut être effectué soit avant soit après l'alignement selon les axes x0y.

Après positionnement et réglage en dynamique, le laser 2 étant en fonctionnement et l'embout 4 déplacé avec un micromanipulateur, la dernière étape du procédé consiste à rendre solidaires l'embase, les plaquettes et l'embout au moyen de quelques points de soudure, par laser de puissance. La figure 3 montre bien les points de soudure 9 qui fixent les plaquettes 5 et 6 sur deux génératrices de l'embout cylindrique 4, et les points de soudure 10 qui fixent les mêmes plaquettes sur l'embase 1.

Le cas le plus simple est évidemment celui dans lequel deux plaquettes 5 et 6 seulement maintiennent et orientent la fibre 3 dans son embout 4. Des contraintes externes de différentes espèces peuvent obliger à mieux immobiliser la fibre 3, au moyen de 3 ou 4 plaquettes 11,12, tel que représenté en figures 4 et 5. Dans ce cas, on aligne et fixe d'abord les deux plaquettes 5 et 6 les plus proches du laser 2, et si une contrainte externe tend à déformer le système et à désaligner la fibre 3, cette contrainte peut être annulée par l'action des plaquettes 11 et/ou 12, les plus éloignées du laser 2.

Les pièces métalliques du système sont en un matériau se déformant peu en températures, par exemple un alliage Fe-Ni-Co tel que l'Invar™, le Kovar™ ou le Dilver™.

Il est évident pour l'homme de l'art que les pièces, telles que décrites, peuvent être adaptées à un type de semiconducteur autre qu'un laser, et que la forme des plaquettes n'est pas limitative de l'invention.

## Revendications

1. Procédé d'alignement des axes optiques d'une fibre optique et d'un composant semiconducteur optoélectronique (2), fixé sur une embase (1) dont une face supérieure sert de plan de référence (R), procédé dans lequel la fibre optique (3), munie d'un embout métallique (4), est alignée en face du composant (2) au moyen d'au moins deux plaquettes métalliques (5,6) situées de part et d'autre de la fibre (3), ce procédé étant caractérisé en ce que les plaquettes (5,6) s'appuient d'une part dans des rainures (7,8) creusées dans la face de référence (R) de l'embase (1) du dispositif et d'autre part contre l'embout (4) de la fibre (3), et en ce que les angles (α) des plaquettes (5,6) avec cette face (R) sont réglées pour déterminer la position de la fibre (3).

2. Procédé selon la revendication 1, caractérisé en ce que, lorsque l'alignement optique est obtenu, les plaquettes métalliques (5, 6) sont soudées sur l'embout métallique (4) et sur l'embase (1) par points de soudure (9,10) au laser.

3. Procédé selon la revendication 1, caractérisé en ce que les rainures (7,8) sont creusées dans l'embase (1) parallèlement à l'axe optique.

4. Dispositif optoélectronique, comportant une fibre optique (3) munie d'un embout métallique (4) et alignée sur l'axe optique d'un composant semiconducteur optoélectronique (2), qui est fixé sur une embase (1) dont une face supérieure sert de plan de référence (R) au moyen d'au moins deux plaquettes métalliques (5,6) situées de part et d'autre de la fibre (3), ce dispositif étant caractérisé en ce que les plaquettes (5,6) s'appuient, chacune, d'une part sur une génératrice de l'embout métallique (4), et d'autre part, par un côté taillé en arête sur une rainure (7,8) creusée dans la face de référence (R) de l'embase (1), chaque plaquette (5,6) formant un angle (α) avec la dite face de référence.

5. Dispositif selon la revendication 4, caractérisé en ce que les rainures (7,8) sont parallèles à l'axe optique du dispositif, et en ce que les plaquettes (5,6) sont situées de part et d'autre de l'embout (4).

## Patentansprüche

1. Verfahren zur Ausrichtung der optischen Achsen einer Lichtleitfaser und eines opto-elektronischen Halbleiterbauteils (2), das auf einer Basis (1) befestigt ist, deren Oberseite als Bezugsebene (R) dient, wobei gemäß diesem Verfahren die Lichtleitfaser (3), die mit einem metallischen Endstück (4) versehen ist, vor dem opto-elektronischen Bauteil (2) mit Hilfe mindestens zweier metallischer Plättchen (5, 6) in Flucht gebracht wird, die zu beiden Seiten der Faser (3) liegen, dadurch gekennzeichnet, daß die Plättchen (5, 6) sich einerseits in Rinnen (7, 8), die in die Bezugsebene (R) der Basis (1) der Vorrichtung eingeschnitten sind, und andererseits gegen das Endstück (4) der Faser (3) abstützen und daß die Winkel (α) der Plättchen (5, 6) mit dieser Ebene (R) so eingestellt werden, daß dadurch die Position der Faser (3) bestimmt wird.

2. Verfahren nach Anspruch 1, dadurch gekennzeichnet, daß nach dem Erreichen der optischen Ausrichtung die metallischen Plättchen (5, 6) auf das metallische Endstück (4) und auf die Basis (1) durch Laserschweißpunkte (9, 10) aufgeschweißt werden.

3. Verfahren nach Anspruch 1, dadurch gekennzeichnet, daß die Rinnen (7, 8) in die Basis (1) parallel zur optischen Achse eingeschnitten werden.

4. Opto-elektronische Vorrichtung mit einer Lichtleitfaser (3), die mit einem metallischen Endstück (4) versehen ist und auf die optische Achse eines opto-elektronischen Halbleiterbauteils (2) ausgerichtet ist, das auf einer Basis (1) fixiert ist, deren Oberseite als Bezugsebene (R) dient, wobei die Faser mit Hilfe mindestens zweier metallischer Plättchen (5, 6), die sich zu beiden Seiten der Faser (3) befinden, fixiert ist, dadurch gekennzeichnet, daß sich die Plättchen (5, 6) je einerseits auf einer Mantellinie des metallischen Endstücks (4) und andererseits mit einer kantig geschnittenen Seite in einer Rinne (7, 8) abstützen, die in die Bezugsebene (R) der Basis (1) eingeschnitten ist, wobei jedes Plättchen (5, 6) einen Winkel (α) mit der Bezugsebene einschließt.

5. Vorrichtung nach Anspruch 4, dadurch gekennzeichnet, daß die Rinnen (7, 8) parallel zur optischen Achse der Vorrichtung verlaufen und daß die Plättchen (5, 6) zu beiden Seiten des Endstücks (4) angeordnet sind.

## Claims

1. Method of aligning the optical axes of an optical fibre and of an optoelectronic semiconductor component (2), fixed to a base (1), an upper face of which serves as a reference plane (R), in which method the optical fibre (3), fitted with a metal ferrule (4), is aligned, opposite the component (2), by means of at least two small metal plates (5, 6) located on either side of the fibre (3), this method being characterized in that the small plates (5, 6) bear, on the one hand, in grooves (7, 8) cut out in the reference face (R) of the base (1) of the device and, on the other hand, against the ferrule (4) of the fibre (3), and in that the angles (α) of the small plates (5, 6) with this face (R) are adjusted in order to determine the position of the fibre (3).

2. Method according to Claim 1, characterized in that, when optical alignment is obtained, the small metal plates (5, 6) are welded to the metal ferrule (4) and to the base (1) by laser spot welds (9, 10).

3. Method according to Claim 1, characterized in that the grooves (7, 8) are cut out in the base (1) parallel to the optical axis.

4. Optoelectronic device, including an optical fibre (3) fitted with a metal ferrule (4) and aligned along the optical axis of an optoelectronic semiconductor component (2), which is fixed to a base (1), an upper face of which serves as a reference plane (R), by means of at least two small metal plates (5, 6) located on either side of the fibre (3), this device being characterized in that the small plates (5, 6) each bear, on the one hand, on a generatrix of the metal ferrule (4) and, on the other hand, by means of a side cut into a sharp edge, on a groove (7, 8) cut out in the reference face (R) of the base (1), each small plate (5, 6) forming an angle (α) with the said reference face.

5. Device according to Claim 4, characterized in that the grooves (7, 8) are parallel to the optical axis of the device and in that the small plates (5, 6) are located on either side of the ferrule (4).
